# EUROPEAN PATENT APPLICATION

(11) **EP 3 972 036 A1**
(43) Date of publication of application: **23.03.2022**
(21) Application number: 21165564.2
(22) Date of filing: 29.03.2021
(51) Int. Cl.: H01M 50/105, H01M 10/052

(54) **BATTERY**

(30) Priority: 18.09.2020 CN 202010988519
(71) Applicant: Ningde Amperex Technology Limited, Ningde, Fujian 352100 (CN)
(72) Inventor: Guo, Peipei, Ningde City 352100 (CN); Peng, Yejun, Ningde City 352100 (CN); Lin, Sen, Ningde City 352100 (CN); He, Ping, Ningde City 352100 (CN)
(74) Representative: Klunker IP Patentanwälte PartG mbB

(57) **Abstract**

A battery (1, 1a, 1b, 1c, 1d, 1e) includes a battery core (200) and a packaging shell (100). The battery core (200) includes a first side face (201) and a second side face (203) that intersect, and the packaging shell (100) includes a body (10) enclosing the battery core (200) and a side seal (20, 20a, 20b, 20c, 20d, 20e) located on a side of the first side face (203). The side seal (20, 20a, 20b, 20c, 20d, 20e) includes: a first folded edge (21,21e) including a first portion (211) and a second portion (213), wherein the first portion (211) extends along the second side face (203) in a first direction away from the body. The second portion (213) extends from the second end (2113) in a second direction toward the body (10), and a second folded edge (23, 23a, 23b, 23c, 23d, 23e) extending from the fourth end (2133) along the first side face (203).

## Description

### TECHNICAL FIELD

This application relates to a battery.

### BACKGROUND

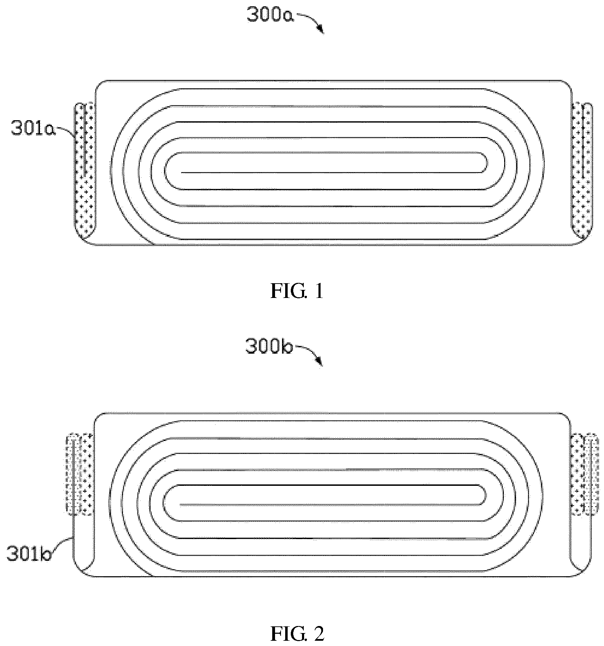

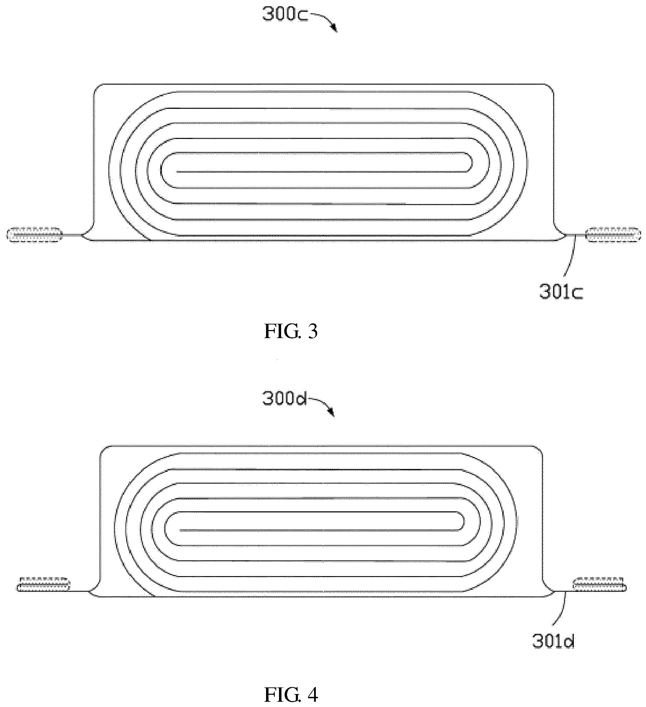

As terminal products become light and thin, batteries equipped for which are required to be thinner and thinner. Side seal structures formed for packaging a conventional battery are shown in FIG. 1 to FIG. 4. In FIG. 1, a side seal 301a of a battery 300a is bent twice in a thickness direction of the battery to form a vertical double-folded edge. In FIG. 2, a side seal 301b of a battery 300b is bent once in a thickness direction of the battery to form a vertical single-folded edge. In the schemes shown in FIG. 1 and FIG. 2, when the battery becomes thinner, a length of the double-folded or single-folded edge after the side seal is bent may exceed the thickness of the battery, thus occupying space in the thickness direction of the battery, resulting in a decrease in the volumetric energy density of the battery. In FIG. 3, a side seal 301c of a battery 300c extends in a width direction of the battery without bending. In FIG. 4, a side seal 301d of a battery 300d is bent once in a width direction of the battery to form a horizontal single-folded edge. In the schemes shown in FIG. 3 and FIG. 4, the side seal occupies space in the width direction of the battery core, which also leads to a decrease in the volumetric energy density of the battery.

### SUMMARY

In view of this, it is necessary to provide a battery with a high volumetric energy density.

This application provides a battery, including a battery core and a packaging shell, where the battery core includes a first side face and a second side face that intersect, and the packaging shell includes a body enclosing the battery core and a side seal located on a side of the first side face of the battery core. The side seal includes:
a first folded edge, including a first portion and a second portion, where the first portion extends along the second side face in a first direction away from the body, and includes a first end and a second end that are opposite in the first direction, wherein the first end is connected to the body; and the second portion extends from the second end in a second direction toward the body, and includes a third end and a fourth end that are opposite in the second direction, wherein the third end is connected to the second end; and
a second folded edge, extending from the fourth end along the first side face.

According to some embodiments of this application, the second folded edge includes a fifth end and a sixth end that are opposite in a direction of the first side face, wherein the fifth end is connected to the fourth end, and the sixth end is covered with an adhesive paper or a binder.

According to some embodiments of this application, the second folded edge is connected in part or in whole to the body.

According to some embodiments of this application, a binder is filled between the second folded edge and the body.

According to some embodiments of this application, a binder is filled between the first portion and the second portion.

According to some embodiments of this application, the first folded edge is a U-shaped, arc-shaped containing an opening, rectangular or trapezoidal structure.

According to some embodiments of this application, the second folded edge includes a third portion and a fourth portion that are connected, wherein the third portion is connected to the second portion, and the third portion and the fourth portion extend along the first side face in opposite directions.

According to some embodiments of this application, a binder is filled between the fourth portion and the body.

According to some embodiments of this application, the binder covers an end of the fourth portion facing away from the third portion.

According to some embodiments of this application, the second folded edge is provided with an adhesive paper at a side facing away from the body, and the adhesive paper covers an end of the second folded edge facing away from the first folded edge and is connected to the body.

In the foregoing battery, the size of the side seal in the thickness direction of the battery is reduced by arranging the first portion and the second portion of the first folded edge extending along the first side face of the battery core and arranging the second folded edge extending along the second side face of the battery core; and the second folded edge of the side seal extending along the thickness direction of the battery reduces the size of the first folded edge only in the width direction of the battery, thereby reducing overall space occupied by the side seal, and improving the volumetric energy density of the battery.

### BRIEF DESCRIPTION OF DRAWINGS

FIG. 1 to FIG. 4 are schematic structural diagrams of batteries in the prior art.
FIG. 5 is a schematic structural diagram of a battery according to an embodiment of this application without a side seal bent.
FIG. 6 to FIG. 11 are schematic structural diagrams of the battery shown in FIG. 5 in Embodiment 1 to Embodiment 6.

Reference signs of main components:

| | |
|---|---|
| battery | 1, 1a, 1b, 1c, 1d, 1e |
| packaging shell | 100 |
| body | 10 |
| side seal | 20, 20a, 20b, 20c, 20d, 20e |
| first folded edge | 21, 21e |
| first portion | 211 |
| first end | 2111 |
| second end | 2113 |
| second portion | 213 |
| third end | 2131 |
| fourth end | 2133 |
| second folded edge | 23, 23a, 23b, 23c, 23d, 23e |
| fifth end | 2301, 2301a, 2301b, 2301c, 2301d |
| sixth end | 2303, 2303a, 2303b, 2303c, 2303d |
| third portion | 231 |
| fourth portion | 233 |
| battery core | 200 |
| first side face | 201 |
| second side face | 203 |
| binder | 300 |
| adhesive paper | 400 |

This application will be further described with reference to the accompanying drawings in the following specific embodiments.

### DESCRIPTION OF EMBODIMENTS

The following describes embodiments of this application with reference to the accompanying drawings in the embodiments of this application. Apparently, the described embodiments are merely some but not all embodiments of this application.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application.

Some embodiments of this application provide a battery, including a battery core and a packaging shell, wherein the battery core includes a first side face and a second side face that intersect, and the packaging shell includes a body enclosing the battery core and a side seal located on a side of the first side face of the battery core. The side seal includes a first folded edge and a second folded edge. The first folded edge includes a first portion and a second portion, wherein the first portion extends along the second side face in a first direction away from the body, and includes a first end and a second end that are opposite in the first direction, wherein the first end is connected to the body; and the second portion extends from the second end in a second direction toward the body, and includes a third end and a fourth end that are opposite in the second direction, wherein the third end is connected to the second end. The second folded edge extends from the fourth end along the first side face.

In the foregoing battery, the size of the side seal in a thickness direction of the battery is reduced by arranging the first portion and the second portion of the first folded edge extending along the first side face of the battery core and arranging the second folded edge extending along the second side face of the battery core; and the second folded edge of the side seal extending along the thickness direction of the battery reduces the size of the first folded edge in a width direction of the battery, thereby reducing overall space occupied by the side seal, and improving volumetric energy density of the battery.

The following describes in detail some embodiments of this application with reference to the accompanying drawings. In absence of conflicts, the following embodiments and features in the embodiments may be mutually combined.

### Embodiment 1

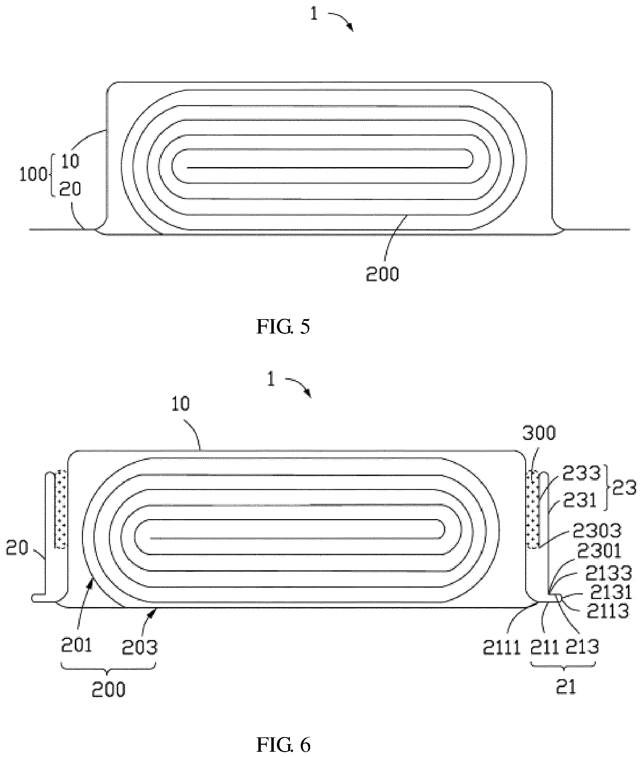

Referring to both FIG. 5 and FIG. 6, some embodiments of this application provide a battery 1 with a high volumetric energy density. The battery 1 includes a packaging shell 100 and a battery core 200. The battery core 200 includes a first side face 201 and a second side face 203 that intersect. Two first side faces 201 and two second side faces 203 are provided. The second side face 203 is parallel to a width direction of the battery 1, and the first side face 201 extends along a thickness direction of the battery core 200. The packaging shell 100 includes a body 10 and a side seal 20. The body 10 encloses the battery core 200. As shown in FIG. 5, when the side seal 20 is not bent, one end of the side seal 20 is connected to the body 10, and extends away from a side of the body 10.

Referring to FIG. 6, the bent side seal 20 is located on a side of the first side face 201. The side seal 20 includes a first folded edge 21 and a second folded edge 23. The first folded edge 21 extends along the second side face 203 of the battery core 200, and the second folded edge 23 extends along the first side face 201 of the battery core 200. The first folded edge 21 is substantially U-shaped, but is not limited thereto. For example, in other embodiments, the first folded edge 21 may alternatively be in other structures such as an arc-shaped structure containing an opening, a rectangle, or a trapezoid. The first folded edge 21 includes a first portion 211 and a second portion 213. The first portion 211 and the second portion 213 are substantially parallel to each other, but are not limited thereto. The first portion 211 and the second portion 213 extend in two opposite directions in the width direction of the battery 1. Specifically, the first portion 211 includes a first end 2111 and a second end 2113 that are opposite. The first end 2111 is connected to the body 10. The first portion 211 extends along the second side face 203 in a first direction away from the body 10, and the first direction is the direction extending along the second side face 203 and away from the body 10. The second portion 213 includes a third end 2131 and a fourth end 2133 that are opposite. The third end 2131 is connected to the second end 2113 of the first portion 211. The second portion 213 extends in a second direction toward the body 10, wherein the second direction is a direction being opposite to the first direction. The second folded edge 23 includes a fifth end 2301 and a sixth end 2303 that are opposite. The fifth end 2301 is connected to the fourth end 2133 of the second portion 213. The second folded edge 23 extends along the first side face 201.

A joint of the first end 2111 and the body 10 substantially corresponds to an intersection of the first side face 201 and the second side face 203. In other words, the intersection of the side seal 20 and the body 10 is located at an end of the body 10 in the thickness direction of the battery core 200, but is not limited thereto. It can be understood that the joint of the first end 2111 and the body 10 may alternatively correspond to any location on the first side face 201, for example, to the center of the first side face 201.

The side seal 20 is bent in the width direction of the battery 1 to form a first folded edge 21, reducing the size of the second folded edge 23 in the thickness direction of the battery 1. Further, when the second folded edge 23 does not exceed an end portion of the body 10 in an extending direction along the first side face 201 of the battery core 200, the side seal 20 does not occupy extra space in the thickness direction of the battery 1; and the second folded edge 23 of the side seal 20 extending along the thickness direction of the battery 1 reduces the size of the first folded edge 21 in the width direction of the battery 1, thus overall space occupied by the side seal 20 is reduced, and the volumetric energy density of the battery 1 is improved.

To further increase the volumetric energy density of the battery 1, the second folded edge 23 includes a third portion 231 and a fourth portion 233 that are connected. The third portion 231 is connected to the second portion 213. The fifth end 2301 on the third portion 231 is connected to the fourth end 2133 of the second portion 213. The third portion 231 extends along the first side face 201 in a direction away from the fifth end 2301. The fourth portion 233 extends along the first side face 201 in a direction toward the fifth end 2301. The third portion 231 and the fourth portion 233 respectively extend along the first side face 201 in opposite directions, thus reducing space occupied by the second folded edge 23 in the thickness direction of the battery 1.

The fourth portion 233 is located between the body 10 and the third portion 231. A binder 300 is filled between the fourth portion 233 and the body 10 to fix the second folded edge 23 to the body 10 on a side of the first side face 201. The binder 300 is UV glue (ultraviolet rays, photosensitive glue), hot melt glue or the like. Although the binder 300 does not cover a sixth end 2303 of the fourth portion 233, because the fourth portion 233 is located between the body 10 and the third portion 231, a cross-sectional aluminum layer of the sixth end 2303 of the side seal 20 is covered by the third portion 231 and is not exposed to the outside of the battery 1, thus reducing the risk of corrosion or short circuiting of the cross-sectional aluminum layer. It can be understood that in another embodiment, the binder 300 may alternatively cover the sixth end 2303 to improve the reliability of avoidance of problems such as corrosion or short circuiting, so as to improve safety and reliability of the battery 1.

### Embodiment 2

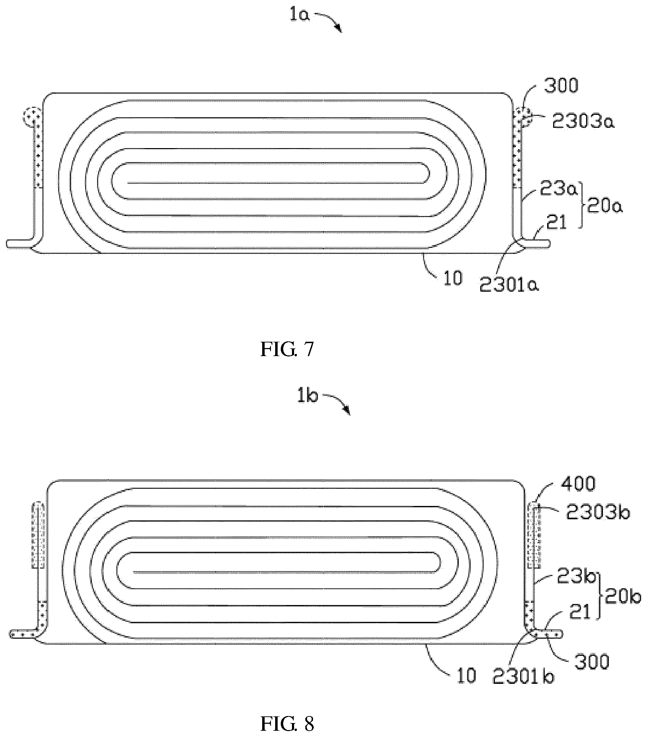

Referring to FIG. 7, the battery 1a has substantially the same structure as the battery 1 in Embodiment 1, with a difference that a side seal 20a of the battery 1a has a different structure from the side seal 20 of the battery 1. Specifically, the second folded edge 23 of the side seal 20 includes two parts extending in opposite directions along the first side face 201: the third portion 231 and the fourth portion 233. A second folded edge 23a of the side seal 20a includes a part extending along the first side face 201 in a direction away from the first folded edge 21. The second folded edge 23a includes a fifth end 2301a and a sixth end 2303a that are oppositely arranged. The fifth end 2301a is connected to the first folded edge 21. The sixth end 2303a is covered with a binder 300, and the binder 300 is filled between the body 10 of the battery 1a and the second folded edge 23a to implement fixed connection. The second folded edge 23a is connected in part to the body 10, but is not limited thereto. It can be understood that in another embodiment, the second folded edge 23a may alternatively be fixedly connected in whole to the body 10 by using the binder 300.

### Embodiment 3

Referring to FIG. 8, a side seal 20b of a battery 1b has the same structure as the side seal 20a of the battery 1a in Embodiment 2. The side seal 20b includes a first folded edge 21 and a second folded edge 23b. The second folded edge 23b includes a fifth end 2301b and a sixth end 2303b that are oppositely arranged. The fifth end 2301b is connected to the first folded edge 21. The sixth end 2303b is covered with an adhesive paper 400, and the adhesive paper 400 covers two opposite sides of the second folded edge 23b. The adhesive paper 400 avoids short circuiting caused by the cross-sectional aluminum layer of the sixth end 2303b being exposed to the outside of the battery 1b.

The binder 300 is filled between the first folded edge 21 and the second folded edge 23b of the battery 1b, and the binder 300 is filled partly between the second folded edge 23b and the body 10, to enhance structural stability of the side seal 20b. The binder 300 filled between the second folded edge 23b and the first folded edge 21 is connected to the binder 300 filled between the second folded edge 23b and the body 10, but is not limited thereto.

### Embodiment 4

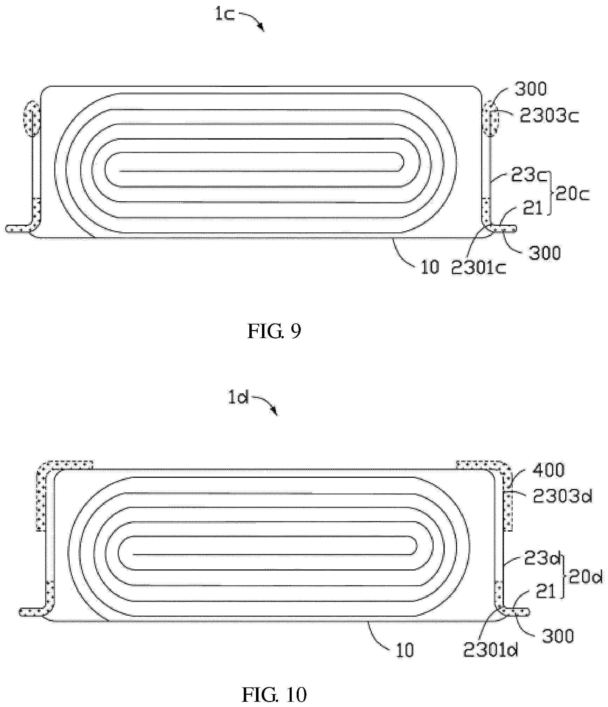

Referring to FIG. 9, a side seal 20c of a battery 1c includes a first folded edge 21 and a second folded edge 23c. The second folded edge 23c includes a fifth end 2301c and a sixth end 2303c that are oppositely arranged. The fifth end 2301c is connected to the first folded edge 21. The battery 1c has substantially the same structure as the battery 1b in Embodiment 3, with a difference that the sixth end 2303b of the side seal 20b is covered with an adhesive paper 400, and the sixth end 2303c of the side seal 20c is covered with the binder 300. The binder 300 can fixedly bond the sixth end 2303c with the body 10, and avoid short circuiting caused by the cross-sectional aluminum layer of the sixth end 2303c being exposed to the outside of the battery 1c.

### Embodiment 5

Referring to FIG. 10, a battery 1d includes a body 10 and a side seal 20d. The side seal 20d includes a first folded edge 21 and a second folded edge 23d. The second folded edge 23d includes a fifth end 2301d and a sixth end 2303d that are oppositely arranged. The fifth end 2301d is connected to the first folded edge 21. The battery 1d has substantially the same structure as the battery 1b in Embodiment 3, with a difference that the position of the adhesive paper 400 on the second folded edge 23d of the battery 1d is different from how the adhesive paper 400 is provided on the second folded edge 23b of the battery 1b. Specifically, the adhesive paper 400 is adhered to the second folded edge 23d and extends to adhere to the body 10. The adhesive tape 400 covers the sixth end 2303d to avoid risks such as short circuiting caused by the cross-sectional aluminum layer of the sixth end 2303d being exposed to the outside of the battery 1d.

### Embodiment 6

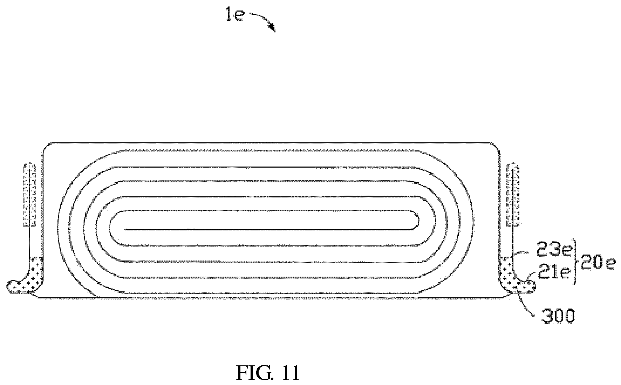

Referring to FIG. 11, a battery 1e includes a body 10 and a side seal 20e. The side seal 20e includes a first folded edge 21e and a second folded edge 23e that are connected. The battery 1e has substantially the same structure as the battery 1b in Embodiment 3, and the second folded edge 23b has the same structure as the second folded edge 23e, but the first folded edge 21e has a different structure from the first folded edge 21 of the battery 1b. Specifically, the first folded edge 21e is an arc-shaped structure containing an opening. When an arc section of the first folded edge 21e has a same length as the first folded edge 21, the first folded edge 21e occupies a small space in a width direction of the battery 1e, which further improves volumetric energy density of the battery 1e. The arc section of the first folded edge 21e is filled with the binder 300 to ensure structural stability of the battery 1e.

In the foregoing battery 1, the size of the side seal 20 in the thickness direction of the battery 1 is reduced by arranging the first portion 211 and the second portion 213 of the first folded edge 21 extending along the first side 201 of the battery core 200 and arranging the second folded edge 23 extending along the second side face 203 of the battery core 200; and the second folded edge 23 of the side seal 20 extending along the thickness direction of the battery 1 reduces the size of the first folded edge 21 in the width direction of the battery 1, thereby reducing the overall space occupied by the side seal 20, and improving the volumetric energy density of the battery 1.

The foregoing embodiments are merely intended to describe the technical solutions of this application, but not to constitute any limitation. Although this application is described in detail with reference to preferred embodiments, persons of ordinary skill in the art should understand that modifications or equivalent replacements can be made to the technical solutions of this application, without departing from the spirit and essence of the technical solutions of this application.

## Claims

1. A battery (1, 1a, 1b, 1c, 1d, 1e), comprising:
a battery core (200) and a packaging shell (100);
**characterized in that**, the battery core (200) comprises a first side face (201) and a second side face (203) intersecting with the first side face (201);
the packaging shell (100) comprises a body (10) enclosing the battery core (200) and a side seal (20, 20a, 20b, 20c, 20d, 20e) located on a side of the first side face (201) of the battery core (200);
wherein the side seal (20, 20a, 20b, 20c, 20d, 20e) comprises:
a first folded edge (21,21e) comprising a first portion (211) and a second portion (213), wherein the first portion (211) extends along the second side face (203) in a first direction away from the body (10), the first portion (211) comprises a first end (2111) and a second end (2113) that are opposite in the first direction, and the first end (2111) is connected to the body (10); wherein the second portion (213) extends from the second end (2113) in a second direction toward the body (10), the second portion (213) comprises a third end (2131) and a fourth end (2133) that are opposite in the second direction, and the third end (2131) is connected to the second end (2113); and
a second folded edge (23, 23a, 23b, 23c, 23d, 23e), extending from the fourth end (2133) along the first side face (201).

2. The battery (1, 1a, 1b, 1c, 1d, 1e) according to claim 1, **characterized in that**, the second folded edge (23, 23a, 23b, 23c, 23d, 23e) comprises a fifth end (2301, 2301a, 2301b, 2301c, 2301d) and a sixth end (2303, 2303a, 2303b, 2303c, 2303d) that are opposite in a direction of the first side face (201); the fifth end (2301, 2301a, 2301b, 2301c, 2301d) is connected to the fourth end (2133), and the sixth end (2303, 2303a, 2303b, 2303c, 2303d) is covered with an adhesive paper (400) or a binder (300).

3. The battery (1, 1a, 1b, 1c, 1d, 1e) according to claim 1, **characterized in that**, the second folded edge (23, 23a, 23b, 23c, 23d, 23e) is bonded in part or in whole to the body (10).

4. The battery (1, 1a, 1b, 1c, 1d, 1e) according to claim 3, **characterized in that**, a binder (300) is filled between the second folded edge (23, 23a, 23b, 23c, 23d, 23e) and the body (10).

5. The battery (1, 1a, 1b, 1c, 1d, 1e) according to claim 1, **characterized in that**, a binder (300) is filled between the first portion (211) and the second portion (213).

6. The battery (1, 1a, 1b, 1c, 1d, 1e) according to claim 1, **characterized in that**, the first folded edge (21,21e) is a U-shaped, arc-shaped containing an opening, rectangular or trapezoidal structure.

7. The battery (1, 1a, 1b, 1c, 1d, 1e) according to claim 1, **characterized in that**, the second folded edge (23, 23a, 23b, 23c, 23d, 23e) comprises a third portion (231) and a fourth portion (233) connected to each other; the third portion (231) is connected to the second portion (213), the third portion (231) and the fourth portion (233) extend in opposite directions along the first side face (201).

8. The battery (1, 1a, 1b, 1c, 1d, 1e) according to claim 7, **characterized in that**, a binder (300) is filled between the fourth portion (233) and the body (10).

9. The battery (1, 1a, 1b, 1c, 1d, 1e) according to claim 8, **characterized in that**, the binder (300) covers an end of the fourth portion (233) facing away from the third portion (231).

10. The battery (1, 1a, 1b, 1c, 1d, 1e) according to claim 1, **characterized in that**, the second folded edge (23, 23a, 23b, 23c, 23d, 23e) is provided with an adhesive paper (400) at a side facing away from the body (10); the adhesive paper (400) covers an end of the second folded edge (23, 23a, 23b, 23c, 23d, 23e) facing away from the first folded edge (21,21e) and is connected to the body (10).
